# EUROPÄISCHE PATENTSCHRIFT

(11) **EP 1 699 859 B1**
(45) Veröffentlichungstag und Bekanntmachung des Hinweises auf die Patenterteilung: **23.01.2008**
(21) Anmeldenummer: 04803665.1
(22) Anmeldetag: 09.12.2004
(51) Int. Cl.: C08K 5/00, C08K 5/1535, C08L 51/04, C08L 69/00

(54) **STABILISIERTE THERMOPLASTISCHE ZUSAMMENSETZUNGEN**
STABILISED THERMOPLASTIC COMPOSITIONS
COMPOSITIONS THERMOPLASTIQUES STABILISEES

(30) Priorität: 22.12.2003 DE 10360367
(43) Veröffentlichungstag der Anmeldung: 13.09.2006
(73) Patentinhaber: Bayer MaterialScience AG, 51368 Leverkusen (DE)
(72) Erfinder: WARTH, Holger, c/o Bayer MaterialScience Ltd., HOK Hongkong (CN); GONZALEZ-BLANCO, Juan, 50937 Köln (DE); WEICKERT, Bodo, 42799 Leichlingen (DE)
(86) Internationale Anmeldenummer: PCT/EP2004/014003
(87) Internationale Veröffentlichungsnummer: WO 2005/063865

(56) Entgegenhaltungen:
- WO-A-01/16224
- DE-A1- 19 808 938
- CLAUSS M ET AL: "Stabilization of styrenic based compounds in presence of benzofuranone derivatives" April 1997 (1997-04), RESEARCH DISCLOSURE, KENNETH MASON PUBLICATIONS, HAMPSHIRE, GB , XP007121695 ISSN: 0374-4353 Tabellen 2-6

## Beschreibung

Die Erfindung betrifft Zusammensetzungen auf Basis von Schlagzähmodifikatoren, die eine Kombination aus mindestens einer Verbindung, ausgewählt aus der Gruppe bestehend aus Phosphorigsäureester, sterisch gehinderten Phenolen und Phosphaten, insbesondere Phosphorigsäureestem und cyclischen Lactonen enthalten.

WO 01/16224 beschreibt mit Cyanacrylsäureester ausgerüstete Polycarbonat-Formmassen in Kombination mit einem Phosphit-Stabilisator und gegebenenfalls einem sterisch gehinderten Phenol und/oder Lacton mit verbessertem Schutz gegen UV-Strahlung und Farbstabilität mit reduzierter Belagsbildung während der Verarbeitung.

Zu Polycarbonat- und Polyesterformmassen werden Phosphorigsäureester zur Stabilisierung bei thermischer Belastung, insbesondere zur Verhinderung von Verfärbungseigenschaften bei der Herstellung der Formmassen durch Compoundierung und Verarbeitung der Formmassen zu thermoplastischen Formkörpern zugesetzt (z.B. DE-A 2 140 207, DE-A 2 255 639, DE-A 2 615 341).

Phosphorigsäureester werden insbesondere Polyalkylenterephthalaten, die thermischen und/oder oxidativen Belastungen oder starker UV-Bestrahlung ausgesetzt sind, zur Stabilisierung zugesetzt. Die Stabilisierung reduziert den Polymerabbau bei Temperung an heißer Luft, wodurch für die praktische Anwendung wesentliche Eigenschaften wie z.B. Zähigkeit und Dehnungsfähigkeit, auf ein weniger niedriges Niveau abfallen als bei unstabilisierten Formmassen (DE-A 2 615 341).

Phosphorigsäureester werden ebenfalls Polymerblends aus Polyalkylenterephthalat und Polycarbonat, die eine gute Zähigkeit sowie Wärmeformbeständigkeit aufweisen, zugesetzt, um eine bessere Lackierbarkeit und Lackhaftung zu ermöglichen (EP-A 0 373 465).

WO 00/49078 beschreibt eine Mischung enthaltend Vinylcyclohexan basierendes Polymer/-Copolymer und ein Stabilisatorsystem, enthaltend Lacton, sterisch gehindertes Phenol und einer Phosphitkomponente. Daraus hergestellte optische Datenträger weisen eine verbesserte Thermostabilisierung und geringeren Molekulargewichtsabbau auf.

Die Aufgabe der vorliegenden Erfindung ist die Reduzierung von Restmonomerbestandteilen, insbesondere von Butadien in Pfropfpolymerisaten, wie z.B. ABS oder Blends enthaltend Pfropfpolymerisate. Diese Reduzierung ist aufgrund der erhöhten Emissionsanforderungen insbesondere im Automobilbereich von großer Bedeutung.

Es wurde nun gefunden, dass der Zusatz einer Kombination eines oder mehrerer cyclischen Lactone mit mindestens einer Verbindung, ausgewählt aus der Gruppe bestehend aus Phosphorigsäureester, sterisch gehinderten Phenolen und Phosphaten, insbesondere Phosphorigsäureester zu Pfropfpolymerisaten und Blends davon mit weiteren Thermoplasten diese Aufgabe löst. Mit dieser Additivkombination gelingt es auch unter scharfen Verarbeitungsbedingungen die Restmonomergehalte in der Zusammensetzung abzusenken und die von der Automobilindustrie gewünschten Grenzwerte bei wirtschaftlichem Durchsatz einzustellen.

Gegenstand der vorliegenden Erfindung ist daher die Verwendung einer Kombination eines oder mehrerer Lactone gemäss Komponente B mit mindestens einer Verbindung gemäss Komponente C zur Reduzierung von Restmonomerbestandteilen in Zusammensetzungen enthaltend
A) Pfropfpolymerisat von
   A.1 5 bis 95 Gew.-%, vorzugsweise 8 bis 90 Gew.-%, insbesondere 10 bis 50 Gew.-% wenigstens eines Vinylmonomeren auf
   A.2 95 bis 5 Gew.-%, vorzugsweise 92 bis 10 Gew.%, insbesondere 90 bis 50 Gew.-% einer oder mehrerer Pfropfgrundlagen mit Glasübergangstemperaturen <10°C, vorzugsweise <0°C, besonders bevorzugt < -20°C, insbesondere < -40°C
B) ein Lacton der Formel (I) 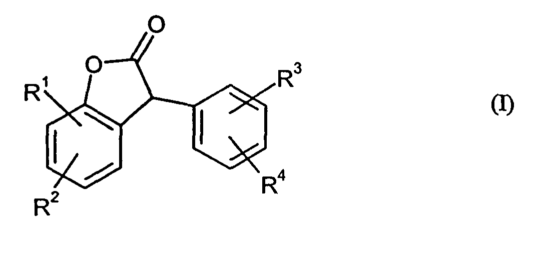 in welcher
   - R¹, R², R³ und R⁴: unabhängig voneinander für Wasserstoff, C₁-C₆-Alkyl, vorzugsweise C₁-C₄-Alkyl, einen 5- oder 6-gliedrigen Ring, vorzugsweise Cyclohexyl oder Cyclopentyl stehen und R¹ und R² unabhängig voneinander besonders bevorzugt für verzweigtes C₁-C₄-Alkyl, insbesondere iso-Propyl und/oder tert.-Butyl stehen, R³ und R⁴ insbesondere für Methyl stehen, und gegebenenfalls
C) mindestens eine Verbindung ausgewählt aus der Gruppe bestehend aus
   C.1) Phosphorigsäureester der Formel (II) 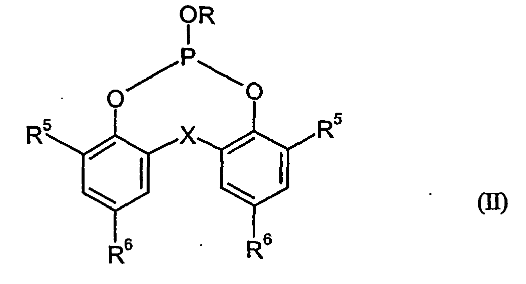 worin
      - R: für H oder für C₁-C₉-Alkyl, C₅-C₆-Cycloalkyl, C₇-C₉-Aralkyl oder C₆-C₁₀-Aryl steht,
      - R⁵ und R⁶: gleich oder verschieden sind und für C₁-C₉-Alkyl, C₅-C₆-Cycloalkyl, C₇-C₉-Aralkyl oder C₆-C₁₀-Aryl stehen und
      - X: für -S- oder R⁷-CH mit R⁷ für Wasserstoff, C₁-C₆-Alkyl oder C₅-C₆-Cycloalkyl steht,
   C.2 sterisch gehinderte Phenole der Formel (III) 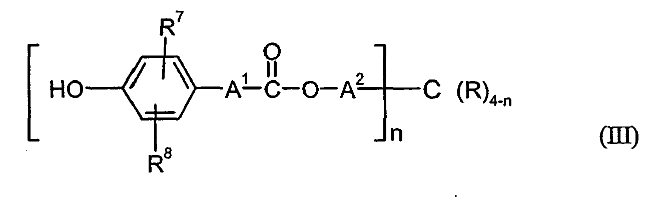 in welcher
      - R⁷ und: R⁸ unabhängig voneinander für Wasserstoff oder C₁-C₆-Alkyl, vorzugsweise C₁-C₄-Alkyl, gegebenenfalls einen 5- oder 6-gliedrigen Ring, vorzugsweise Cyclohexyl oder Cyclopentyl,
      - R⁷ und R⁸: unabhängig voneinander besonders bevorzugt für C₃-C₄-Alkyl, insbesondere für iso-Propyl und/oder tert.-Butyl stehen,
      - n: für eine ganze Zahl von 1 bis 4, vorzugsweise für 3 oder 4, insbesondere 4 steht,
      - A¹ und A²: unabhängig voneinander für C₁-C₆-Alkylen, vorzugsweise C₁-C₄-Alkylen, insbesondere Methylen, Ethylen stehen,
      - R: unabhängig für Wasserstoff, C₁-C₆-Alkyl, vorzugsweise C₁-C₄-Alkyl, C₁-C₆-Alkoxy, vorzugsweise C₁-C₄-Alkoxy, gegebenenfalls einen 5- oder 6-gliedrigen Ring, vorzugsweise Cyclohexyl oder Cyclopentyl steht,
   C.3 Phosphite der Formel (IV) 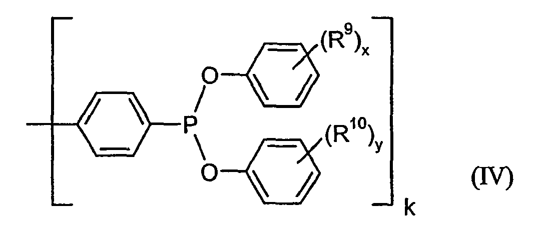 in welcher
      - R⁹ und R¹⁰: unabhängig voneinander für Wasserstoff oder C₁-C₆-Alkyl, vorzugsweise C₁-C₄-Alkyl, gegebenenfalls einen 5- oder 6-gliedrigen Ring, vorzugsweise Cyclohexyl oder Cyclopentyl,
      - x und y: unabhängig voneinander für 0, 1, 2, 3, 4, 5, vorzugsweise für 0, 1 oder 2 stehen und
      - k: für 1 oder 2 steht,
      - R⁹ und R¹⁰: unabhängig voneinander besonders bevorzugt für C₃-C₄-Alkyl, insbesondere iso-Propyl und/oder tert.-Butyl stehen
   und gegebenenfalls weiteren Komponenten, ausgewählt aus mindestens einer der Gruppen
D) Polycarbonat und/oder Polyestercarbonat
E) Vinyl(co)polymerisat
F) Flammschutzmittel, insbesondere Phosphor-basierende Flammschutzmittel
G) weitere Additive.

Komponente B) wird bevorzugt in Mengen von 0,01 bis 2 Gew.-%, besonders bevorzugt 0,02 bis 1 Gew.-% und ganz besonders bevorzugt 0,04 bis 0,5 Gew.-%, bezogen auf 100 Gew.-Teile der Gesamtzusammensetzung eingesetzt.

Komponente C) wird bevorzugt in Mengen von 0,01 bis 2 Gew.-%, vorzugsweise 0,02 bis 1 Gew.-%, besonders bevorzugt von 0,04 bis 0,5 Gew.-Teilen (bezogen auf 100 Gew.-Teile der Gesamtzusammensetzung zugesetzt.

### Besonders bevorzugt beträgt das Gewichtsverhältnis von B) : C) 1:2,5

Bevorzugte Zusammensetzungen enthalten
A) 2 bis 50, vorzugsweise 3 bis 45, insbesondere 4 bis 30 Gew.-Teile Pfropfpolymerisat der Komponente A)
B) 0,01 bis 1, vorzugsweise 0,02 bis 0,5, besonders bevorzugt 0,04 bis 0,2 Gew.-Teile Lacton der Formel (I)
C) 0,01 bis 2, vorzugsweise 0,01 bis 1, besonders bevorzugt 0,03 bis 0,5 Gew.-Teile Phosphorigsäureester der Formel (II)
D) 20 bis 98, vorzugsweise 25 bis 97, insbesondere 30 bis 93 Gew.-Teile, ganz besonders bevorzugt 60 bis 93 Gew.-Teile Poly(ester)carbonat
E) 0 bis 40, vorzugsweise 0 bis 35 Gew.-Teile, insbesondere 2 bis 25 Gew.-Teile Vinyl(co)polymerisat
F) 0 bis 20, vorzugsweise 2 bis 18 Gew.-Teile Flammschutzmittel gemäß Komponente F)
G) 0 bis 2, vorzugsweise 0,1 bis 1, insbesondere 0,2 bis 0,7 Gew.-Teile Antidrippingmittel gemäß Komponente G), insbesondere fluoriertes Polyolefin.

### Komponente A

Die erfindungsgemäße Zusammensetzung enthält ein oder mehrere Pfropfpolymerisate gemäß Komponente A.

Monomere A. sind vorzugsweise Gemische aus
- A.1.1: 50 bis 99 Gew.-% mindestens eines Monomeren ausgewählt aus der Gruppe bestehend aus Vinylaromaten, kernsubstituierten Vinylaromaten (wie beispielsweise Styrol, α-Methylstyrol, p-Methylstyrol, p-Chlorstyrol), Methacrylsäure-(C₁-C₈)-Alkylester (wie Methylmethacrylat, Ethylmethacrylat) und
- A.1.2: 1 bis 50 Gew.-% mindestens eines Monomeren ausgewählt aus der Gruppe bestehend aus Vinylcyaniden (ungesättigte Nitrile wie Acrylnitril und Methacrylnitril) und/oder (Meth)Acrylsäure-(C₁-C₈)-Alkylester (wie Methylmethacrylat, n-Butylacrylat, tert.-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere A.1.1 sind ausgewählt aus mindestens einem der Monomere Styrol, α-Methylstyrol und Methylmethacrylat, bevorzugte Monomere A.1.2 sind ausgewählt aus mindestens einem der Monomere Acrylnitril, Maleinsäureanhydrid und Methylmethacrylat.

Besonders bevorzugte Monomere sind A.1.1 Styrol und A.1.2 Acrylnitril.

Für die Pfropfpolymerisate A geeignete Pfropfgrundlagen A.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke. Ebenso sind Mischungen aus verschiedenen der genannten Kautschuke als Pfropfgrundlage geeignet.

Bevorzugte Pfropfgrundlagen A.2 sind Dienkautschuke (z.B. auf Basis Butadien, Isopren) oder Kautschuk auf Basis von Gemischen von Dienen mit weiteren copolymerisierbaren Monomeren (z.B. gemäß A.1.1 und A.1.2), mit der Maßgabe, dass die Glasübergangstemperatur der Komponente A.2 unterhalb <10°C, vorzugsweise <0°C, besonders bevorzugt <-20°C, insbesondere <-40°C liegt. Besonders bevorzugt ist reiner Polybutadienkautschuk oder Butadien/Styrolcopolymerisat mit bis zu 50, vorzugsweise 40, insbesondere 30 Gew.-% (bezogen auf die Pfropfgrundlage) Styrol.

Geeignete Acrylatkautschuke gemäß A.2 der Polymerisate A sind vorzugsweise Polymerisate aus Acrylsäurealkylestern, gegebenenfalls mit bis zu 40 Gew.-%, bezogen auf die Pfropfgrundlage, anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester sowie Mischungen dieser Monomeren.

Besonders bevorzugte Polymerisate A sind z.B. ABS-Polymerisate (Emulsions-, Masse- und Suspensions-ABS), wie sie z.B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind.

Der Gelanteil der Pfropfgrundlage A.2 beträgt im Allgemeinen mindestens 30 Gew.%, vorzugsweise mindestens 40 Gew.-% (in Toluol gemessen).

Die Pfropfgrundlage A.2 hat im Allgemeinen eine mittlere Teilchengröße (d₅₀-Wert) von 0,05 bis 10 µm, vorzugsweise 0,1 bis 5 µm, besonders bevorzugt 0,1 bis 1 µm, insbesondere 0,2 bis 0,5 µm.

Die Pfropfcopolymerisate A werden durch radikalische Polymerisation, z.B. durch Emulsions-, Suspensions-, Lösungs- oder Massepolymerisation, vorzugsweise durch Emulsionspolymerisation hergestellt (vgl. z.B. DE-A 10 234 419).

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage A.2.

Bevorzugte "andere" polymerisierbare, ethylenisch ungesättigte Monomere, die neben den Acrylsäureestern gegebenenfalls zur Herstellung der Pfropfgrundlage A.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage A.2 sind Emulsionspolymerisate, die einen Gelgehalt von mindestens 60 Gew.-% aufweisen.

Weitere geeignete Pfropfgrundlagen gemäß A.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage A.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente B

Cyclische Lactone der Formel (I) sind allgemein bekannt (z.B. WO 00/49078) bzw. nach bekannten Verfahren herstellbar und auch käuflich erhältlich. Besonders bevorzugt ist das Lacton gemäß Formel (I-1)

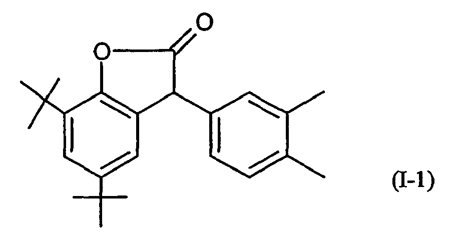

### Komponente C

Im Falle n = 1 bei Verbindungen der Formel (IV) ist die Valenz des in Frage kommenden Kohlenstoffatoms mit Wasserstoff oder C₁-C₆-Alkyl, C₁-C₆-Alkoxy gegebenenfalls 5- oder 6-gliedrigen Ring, vorzugsweise C₁-C₄-Alkyl, vorzugsweise mit den bei R⁹ und R¹⁰ genannten Resten, gebunden.

Die angegebenen Strukturformeln geben jeweils die Hauptkomponenten (>90 %) der technisch eingesetzten Verbindungen wieder, welche in geringeren Anteilen z.B. Isomere, Ausgangs- und Nebenverbindungen enthalten können.

Bevorzugt werden Phosphorigsäureester der Formel (II) eingesetzt, in denen R⁵ und R⁶ für einen Benzyl-, α-Methylbenzyl-, α,α-Dimethylbenzyl-, Methyl-, Ethyl-, Isopropyl-, tert.-Butyl-, tert.-Amyl-, Isononyl-, Cyclopentyl- oder Cyclohexyl-Rest stehen und X für 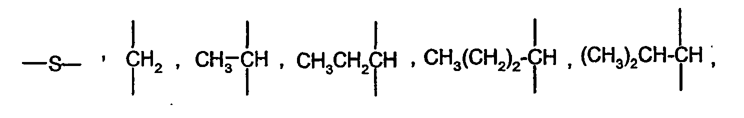 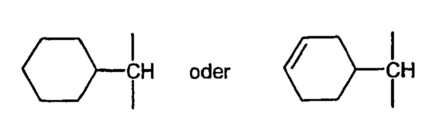 steht.

Besonders bevorzugt ist der Phosphorigsäureester der Formel (II-1), worin X für Methylen, R⁵ für Cyclohexyl und R⁶ für Methyl stehen [4,8-Dicylohexyl-6-hydroxy-2,10-dimethyl-12H-dibenzo-(d,g)(1,3,2)-dioxaphosphocin]

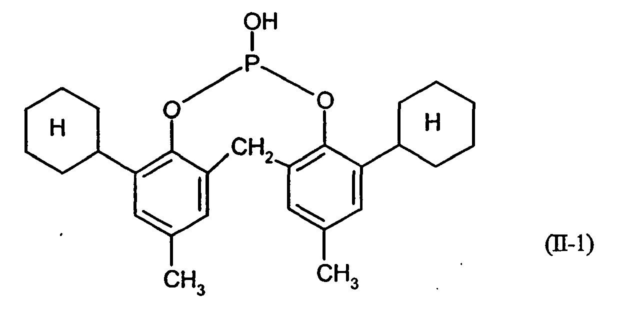

Die Phosphorigsäureester der Formel (II) können in bekannter Weise hergestellt werden durch Umsetzung von Triphenylphosphit mit entsprechenden Dihydroxyverbindungen in Gegenwart von Wasser (vgl. z.B. DE-A 29 29 229).

Im folgenden sind die Formeln der Verbindungen III-1, IV-1 und IV-2, gezeigt: 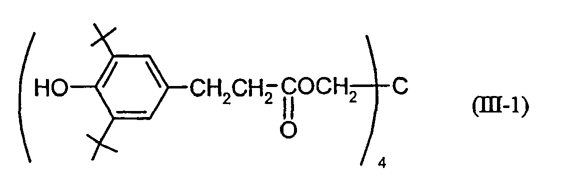 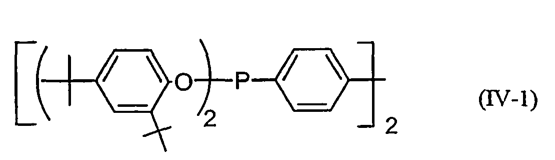 (erhältlich unter dem Handelsnamen Irgafos P EPO, Ciba Specialities) 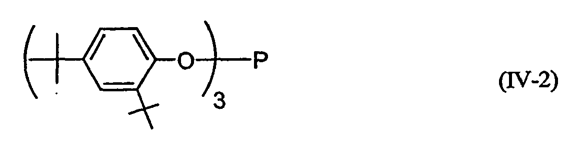 (erhältlich unter dem Handelsnamen Irgafos 168, Ciba Specialities)

Die sterisch gehinderten Phenole und Phosphit-Verbindungen sind allgemein bekannt und käuflich erhältlich

Es kann auch eine Mischung mehrerer Verbindungen gemäß Komponente (C) eingesetzt werden.

Die Zusammensetzung kann weitere Thermoplasten, wie z.B. Polycarbonat (Komponente D), Vinyl(co)polymerisate (Komponente E) und/oder Flammschutzmittel F), insbesondere Phosphor-basierende Flammschutzmittel enthalten. Additive wie z.B. Entformungsmittel, Stabilisatoren usw. (Komponente G) können ebenfalls zugesetzt werden.

### Komponente D

Erfindungsgemäß geeignete aromatische Polycarbonate und/oder aromatische Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 (z.B. EP-A 640 655).

Die Herstellung aromatischer Polycarbonate erfolgt z. B. durch Schmelzeverfahren oder durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (V) 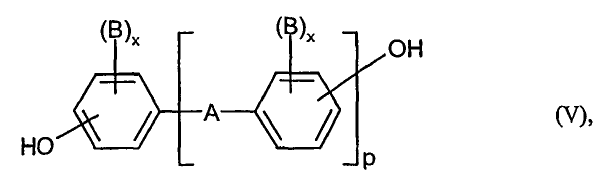 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (1) oder (2) 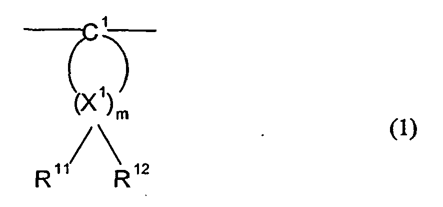 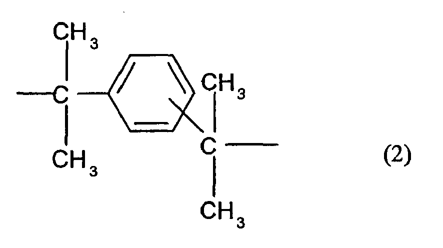
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹¹ und R¹²: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R¹¹ und R¹² gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α,-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2 Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich. Geeignete Kettenabbrecher und Verzweigungsmittel, falls gewünscht, sind in EP-A 640 655 beschrieben.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenolen. Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1. Bei der Herstellung von Polyestercarbonaten wird zusätzlich ein Kohlensäurehalogenid, vorzugsweise Phosgen als bifunktionelles Säurederivat mit verwendet. Die aromatischen Polyestercarbonate können auch aromatische Hydroxycarbonsäuren eingebaut enthalten. Die aromatischen Polyestercarbonate können sowohl linear als auch in bekannter Weise verzweigt sein (siehe dazu ebenfalls DE-A 2 940 024 und DE-A 3 007 934).

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente E

Als Komponente E) können weiterhin ein oder mehrere thermoplastische Vinyl(Co)Polymerisate zugesetzt werden.

Geeignet sind als Vinyl(Co)Polymerisate Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
50 bis 99, vorzugsweise 60 bis 80 Gew.-% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
1 bis 50, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Besonders bevorzugt ist das Copolymerisat aus Styrol und Acrylnitril.

Die (Co)Polymerisate sind harzartig und thermoplastisch. Die (Co)Polymerisate sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000, insbesondere zwischen 50.000 und 180.000.

### Komponente F

Vorzugsweise können die erfindungsgemäßen Zusammensetzungen, insbesondere Zusammensetzungen enthaltend Polycarbonat und Pfropfpolymerisat gemäß Komponente A), phosphorhaltige Flammschutzmittel enthalten. Diese sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (VI) 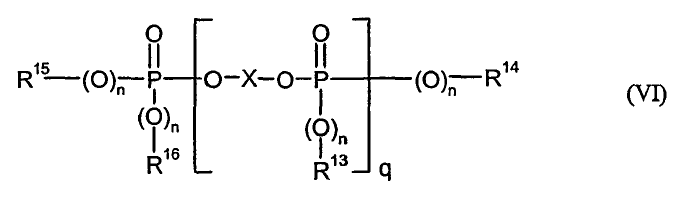 worin
- R¹³, R¹⁴, R¹⁵ und R¹⁶: unabhängig voneinander jeweils gegebenenfalls halogeniertes C₁- bis C₈-Alkyl, jeweils gegebenenfalls durch Alkyl, vorzugsweise C₁-C₄-Alkyl, und/oder Halogen, vorzugsweise Chlor, Brom, substituiertes C₅- bis C₆-Cycloalkyl, C₆- bis C₂₀-Aryl oder C₇-bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹³, R¹⁴ R¹⁵ und R¹⁶ unabhängig voneinander für C₁-C₄-Alkyl, Phenyl, Naphthyl oder Phenyl-C₁-C₄-alkyl. Die aromatischen Gruppen R¹³, R¹⁴ R¹⁵ und R¹⁶ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (VI) bedeutet bevorzugt einen ein- oder mehrkernigen aromatischen Rest mit 6 bis 30 C-Atomen. Dieser leitet sich bevorzugt von Diphenolen der Formel (V) ab.
- n: in der Formel (VI) kann, unabhängig voneinander, 0 oder 1 sein, vorzugsweise ist n gleich 1.
- q: steht für zahlengemittelte Werte von 0 bis 30. Vorzugsweise für zahlengemittelte q-Werte von 0,3 bis 20, besonders bevorzugt 0,5 bis 10, insbesondere 0,5 bis 6, ganz besonders bevorzugt von 0,7 bis 1,4.
- X: steht besonders bevorzugt für 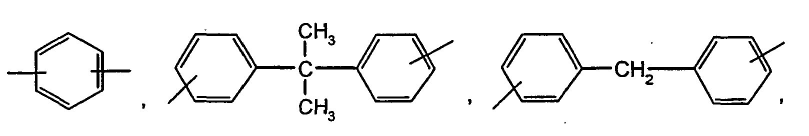 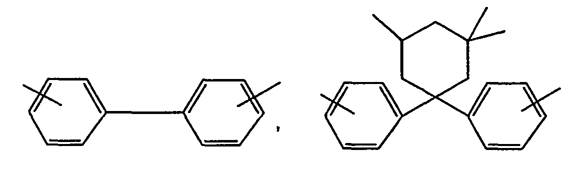 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Die Phosphorverbindungen gemäß Formel (VI) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molelculargewichtsverteilung) bestimmt wird und daraus die Mittelwerte für q berechnet werden.

### Komponente G

Die Flammschutzmittel entsprechend Komponente F) werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente A) oder mit einer Emulsion eines Copolymerisats, vorzugsweise auf Styrol/Acrylnitril- oder PMMA-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B1) oder einem Copolymerisat, vorzugsweise auf Styrol/Acrylnitril- oder PMMA-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethycrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertern Polyolefin von 5 bis 95 Gew.-%, vorzugsweise 7 bis 80 Gew.-%.

Die fluorierten Polyolefine werden in den oben genannten Mengen eingesetzt, wobei sich diese Mengenangaben bei Einsatz eines Koagulats, Präcompounds oder Masterbatches auf das reine fluorierte Polyolefin beziehen.

### Weitere Zusätze

Die erfindungsgemäßen Zusammensetzungen können weiterhin bis zu 10 Gew.-Teile, bevorzugt 0,1 bis 5 Gew.-Teile, wenigstens eines üblichen Polymeradditivs wie ein Gleit- und Entformungsmittel, beispielsweise Pentaerythrittetrastearat, ein Nukleiermittel, ein Antistatikum, einen Stabilisator, ein Lichtschutzmittel, einen Füll- und Verstärkungsstoff, ein Farbstoff oder Pigment sowie ein weiteres Flammschutzmittel oder einen Flammschutzsynergisten, beispielsweise einen anorganischen Stoff in nanoskaliger Form und/oder ein silikatisches Material wie Talk oder Wollastonit enthalten.

Der Gewichtsteil-Angaben in dieser Anmeldung sind so zu normieren, dass die Summe der Gewichtsteile aller Komponenten A) bis G) gleich 100 gesetzt werden.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formkörpern oder Formteilen verwendet werden:
Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten werden auf einer ZSK-25 bei verschiedenen Massetemperaturen (s. Tabelle 1) compoundiert. Anschließend werden die Restmonomerwerte, insbesondere die Menge an Butadien gemessen. Diese Messungen erfolgen sowohl am Granulat, als auch an Formkörpern" welche auf einer Spritzgießmaschine Typ Arburg 270 E bei den angegebenen Temperaturen (280/300°C)hergestellt werden.

### Komponente A (ABS)

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation.

### Komponente B (I-1)

HP 136 der Ciba Speciality Chemicals, Basel, Schweiz (Lacton der Formel I-1 - siehe vorne).

### Komponente C (II-1)

Phosphorigsäureester der Formel II-1 (siehe vorne)

### Komponente D (PC)

Lineares Polycarbonat auf Basis Bisphenol A mit einer relativen Lösungsviskosität von 1,24, gemessen in CH₂Cl₂ als Lösungsmittel bei 25°C und einer Konzentration von 0,5 g/100 ml.

### Komponente E (SAN)

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente G (PETS

PETS = Pentaerythrittetrastearat

Die Bestimmung des Restmonomer-Gehalt erfolgt mittels GC/MS (Gaschromatographie/Massenspektroskopie).

**Tabelle 1: Zusammensetzung der Formmassen und Eigenschaften**

| Komponenten/Mengen | 1 | 2 | 3 | 4 |
|---|---|---|---|---|
| u. Gew.-Teile | (Vergleich) | | | |
| PC | 70,0 | 70,0 | 70 | 70,0 |
| SAN | 17,0 | 17,0 | 17 | 17,0 |
| ABS | 13,0 | 13,0 | 13 | 13,0 |
| PETS | 0,75 | 0,75 | 0,75 | 0,75 |
| II-1 | 0,1 | 0,1 | - | - |
| I-1 | - | 0,06 | 0,06 | 0,09 |
| Restmonomer am Probekörper gemessen (280°C Massetemp. beim Spritzguß): Butadien (ppm) | 1,7 | 1(-41%) | 1,1 (-35%) | 0,9 (-47%) |
| Restmonomer am Probekörper gemessen (300°C Massetemp. beim Spritzguß) Butadien (ppm) | 3,8 | 2,7 (-29%) | 2,6 (-32%) | 2,5 (-34%) |
| Restmonomer am Granulat (260°C Massetemp. bei der Compoundierung) Butadien (ppm) | 1,2 | 0,8 (-33%) | 1 (-17%) | 0,7 (-42%) |

Im Gegensatz zum Vergleichsbeispiel 1 werden mit den anderen Einstellungen eine deutliche Absenkung des Restmonomergehaltes erreicht. Der Restmonomergehalt eines Vergleichsbeispiels ohne die Additive (I-1) und (II-1) lag geringfügig höher als im Beispiel 1. Die Reduzierung wird sowohl am Granulat erreicht, als auch bei einer späteren Weiterverarbeitung zu Formmassen erhalten.

## Patentansprüche

1. Verwendung einer Kombination eines oder mehrer Lactone gemäß Komponente B mit mindestens einer Verbindung gemäß Komponente C zur Reduzierung von Restmonomerbestandteilen in Zusammensetzungen enthaltend
A) Pfropfpolymerisat von
A.1 5 bis 95 Gew.-% wenigstens eines Vinylmonomeren auf
A.2 95 bis 5 Gew.-% einer oder mehrerer Pfropfgrundlagen mit Glasübergangstemperaturen <10°C,
B) ein Lacton der Formel (I) 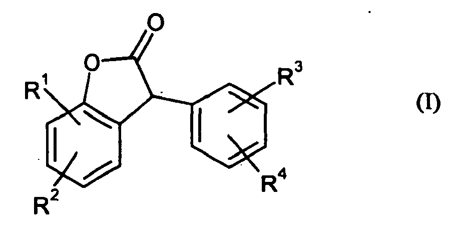 in welcher
R¹, R², R³ und R⁴ unabhängig voneinander für Wasserstoff, C₁-C₆-Alkyl oder einen 5- oder 6-gliedrigen Ring, und gegebenenfalls
C) mindestens eine Verbindung ausgewählt aus der Gruppe bestehend aus
C.1) Phosphorigsäureester der Formel (II) 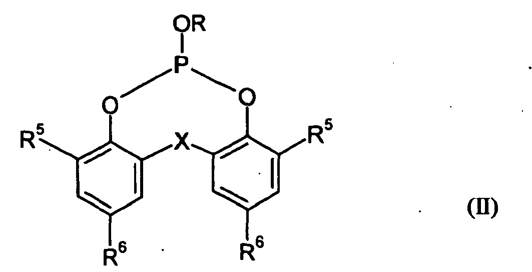 worin
R für H oder C₁-C₉-Alkyl, C₅-C₆-Cycloalkyl, C₇-C₉-Aralkyl oder C₆-C₁₀-Aryl steht,
R⁵ und R⁶ gleich oder verschieden sind und für C₁-C₉-Alkyl, C₅-C₆-Cycloalkyl, C₇-C₉-Aralkyl oder C₆-C₁₀-Aryl stehen und
X für -S- oder R⁷-CH mit R⁷ für Wasserstoff, C₁-C₆-Alkyl oder C₅-C₆-Cycloalkyl steht,
C.2 Sterisch gehinderte Phenole der Formel (III) 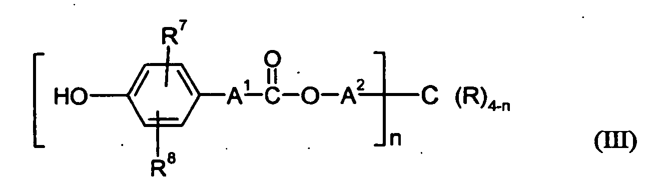 in welcher
R⁷ und R⁸ unabhängig voneinander für Wasserstoff, C₁-C₆-Alkyl oder einen 5- oder 6-gliedrigen Ring,
n für eine ganze Zahl von 1 bis 4,
A¹ und A² unabhängig voneinander für C₁-C₆-Alkylen stehen,
R unabhängig für Wasserstoff, C₁-C₆-Alkyl, C₁-C₆-Alkoxy oder einen 5- oder 6-gliedrigen Ring, steht;
C.3 Phosphite der Formel (IV) 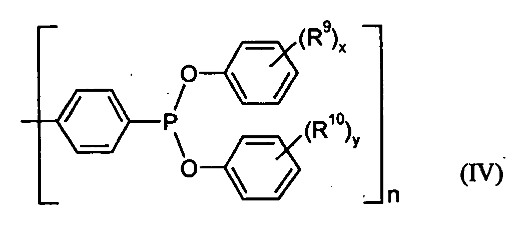 in welcher
R⁹ und R¹⁰ unabhängig voneinander für Wasserstoff oder C₁-C₆-Alkyl, gegebenenfalls einen 5- oder 6-gliedrigen Ring,
x und y unabhängig voneinander für 0, 1, 2, 3, 4, 5 stehen und
n für 1 oder 2 steht,
und gegebenenfalls weiteren Komponenten, ausgewählt aus mindestens einer der Gruppen
D) Polycarbonat und/oder Polyestercarbonat
E) Vinyl(co)polymerisat
F) Flammschutzmittel,
G) Additive.

2. Verwendung gemäß Anspruch 1 bei Zusammensetzungen enthaltend 0,01 bis 2 Gew.-Teile der Komponente B).

3. Verwendung gemäß Anspruch 1 oder 2 bei Zusammensetzungen enthaltend 0,01 bis 2 Gew.-Teile der Komponente C).

4. Verwendung gemäß einem der vorhergehenden Ansprüche bei Zusammensetzungen enthaltend
A) 2 bis 50 Gew.-Teile Pfropfpolymerisat der Komponente A)
B) 0,01 bis 1 Gew.-Teil Lacton der Formel (I)
C) 0,01 bis 2 Gew.-Teil Phosphorigsäureester der Formel (II)
D) 20 bis 98Gew.-Teile Poly(ester)carbonat
E) 0 bis 40 Gew.-Teile Vinyl(co)polymerisat
F) 0 bis 20 Gew.-Teile Flammschutzmittel
G) 0 bis 2 Gew.-Teile Antidrippingmittel.

5. Verwendung gemäß einem der vorhergehenden Ansprüche bei Zusammensetzungen enthaltend Pfropfpolymerisate, erhältlich durch Polymerisation von
A.1.1 50 bis 99 Gew.-% mindestens eines Monomeren ausgewählt aus der Gruppe bestehend aus Vinylaromaten, kernsubstituierten Vinylaromaten und Methacrylsäure-(C₁-C₈)-Alkylester und
A.1.2 1 bis 50 Gew.-% mindestens eines Monomeren ausgewählt aus der Gruppe bestehend aus Vinylcyaniden, (Meth)Acrylsäure-(C₁-C₈)-Alkylester und Derivaten ungesättigter Carbonsäuren.

6. Verwendung gemäß Anspruch 5, wobei Monomere A.1.1 ausgewählt sind aus mindestens einem der Monomere Styrol, α-Methylstyrol und Methylmethacrylat, und Monomere A.1.2 ausgewählt sind aus mindestens einem der Monomere Acrylnitril, Maleinsäureanhydrid und Methylmethacrylat.

7. Verwendung gemäß Anspruch 4, wobei die Pfropfgrundlage A.2 ausgewählt ist aus Dienkautschuk, EP(D)M-Kautschuk, Acrylat-, Polyurethan-, Silikon-, Chlorpren und Ethylen/Vinylacetat-Kautschuk sowie Kompositen aus den genannten Kautschuken.

8. Verwendung gemäß einem der vorhergehenden Ansprüche, wobei als Komponente B ein cyclisches Lacton der Formel (I) eingesetzt wird

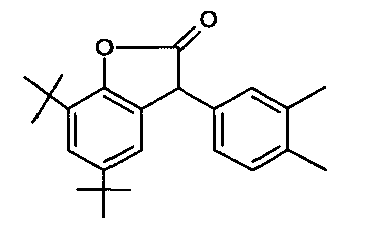

9. Verwendung gemäß einem der vorhergehenden Ansprüche, wobei als Komponente C.1 ein Phosphorigsäureester der Formel (II), in denen R⁵ und R⁶ für einen Benzyl-, α-Methylbenzyl-, α,α-Dimethylbenzyl-, Methyl-, Ethyl-, Isopropyl-, tert.-Butyl-, tert.-Amyl-, Isononyl-, Cyclopentyl- oder Cyclohexyl-Rest stehen und X für 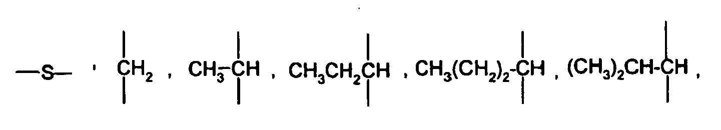 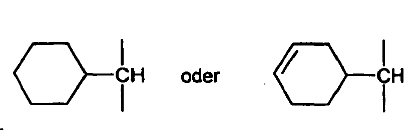 steht, eingesetzt wird.

10. Verwendung gemäß einem der vorhergehenden Ansprüche, wobei als Komponente C.1 ein Phosphorigsäureester der Formel eingesetzt wird.

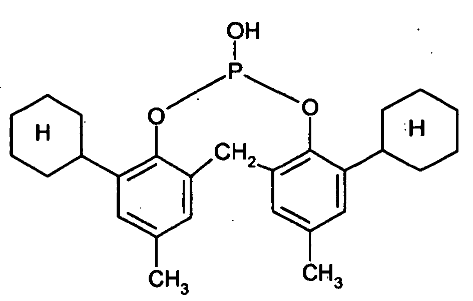

11. Verwendung gemäß einem der vorhergehenden Ansprüche, wobei als Komponente C mindestens eine Verbindung der Formel: 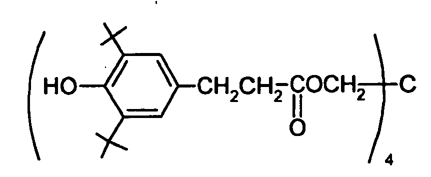 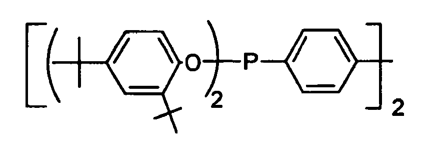 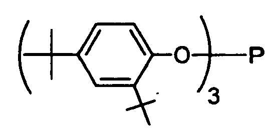 eingesetzt wird.

## Claims

1. Use of a combination of one or more lactones according to component B with at least one compound according to component C for reducing residual monomer constituents in compositions comprising
A) graft polymer of
A.1 from 5 to 95 wt.% of at least one vinyl monomer with
A.2 from 95 to 5 wt.% of one or more graft bases having glass transition temperatures < 10°C,
B) a lactone of formula (I) 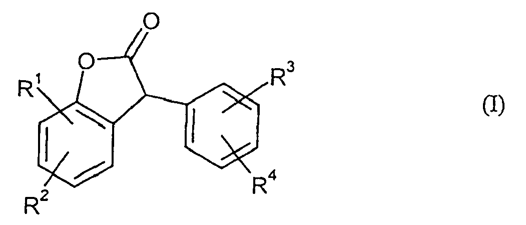 in which
R¹, R², R³ and R⁴ each independently of the others represents hydrogen, C₁-C₆-alkyl or a 5- or 6-membered ring, and optionally
C) at least one compound selected from the group consisting of
C.1) phosphorous acid esters of formula (II) 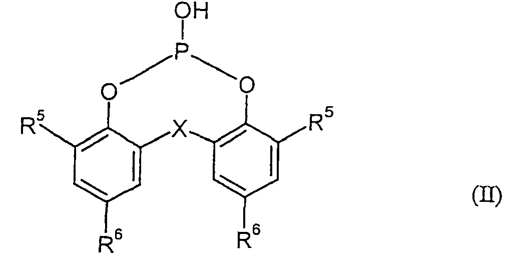 wherein
R represents H or C₁-C₉-alkyl, C₅-C₆-cycloalkyl, C₇-C₉-aralkyl or C₆-C₁₀-aryl,
R⁵ and R⁶ are identical or different and represent C₁-C₉-alkyl, C₅-C₆-cycloalkyl, C₇-C₉-aralkyl or C₆-C₁₀-aryl, and
X represents -S- or R⁷-CH, wherein R⁷ represents hydrogen, C₁-C₆-alkyl or C₅-C₆-cycloalkyl,
C.2 sterically hindered phenols of formula (III) 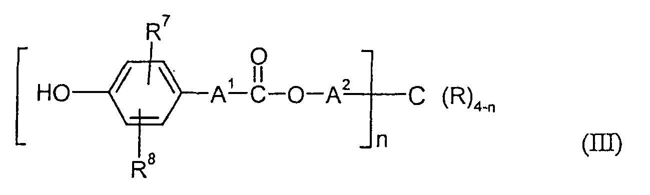 in which
R⁷ and R⁸ each independently of the other represents hydrogen, C₁-C₆-alkyl or a 5- or 6-membered ring,
n represents an integer from 1 to 4,
A¹ and A² each independently of the other represents C₁-C₆-alkylene,
R independently of any other(s) represents hydrogen, C₁-C₆-alkyl, C₁-C₆-alkoxy or a 5- or 6-membered ring;
C.3 phosphites of formula (IV) 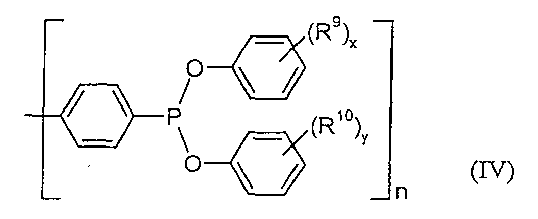 in which
R⁹ and R¹⁰ each independently of the other represents hydrogen or C₁-C₆-alkyl, optionally a 5- or 6-membered ring,
x and y each independently of the other represents 0, 1, 2, 3, 4, 5, and
n represents 1 or 2,
and optionally further components selected from at least one of the groups
D) polycarbonate and/or polyester carbonate
E) vinyl (co)polymer
F) flameproofing agents
G) additives.

2. Use according to claim 1 in compositions comprising from 0.01 to 2 parts by weight of component B).

3. Use according to claim 1 or 2 in compositions comprising from 0.01 to 2 parts by weight of component C).

4. Use according to any one of the preceding claims in compositions comprising
A) from 2 to 50 parts by weight of graft polymer of component A)
B) from 0.01 to 1 part by weight of lactone of formula (I)
C) from 0.01 to 2 parts by weight of phosphorous acid ester of formula (II)
D) from 20 to 98 parts by weight of poly(ester) carbonate
E) from 0 to 40 parts by weight of vinyl (co)polymer
F) from 0 to 20 parts by weight of flameproofing agent
G) from 0 to 2 parts by weight of antidripping agent.

5. Use according to any one of the preceding claims in compositions comprising graft polymers obtainable by polymerisation of
A.1.1 from 50 to 99 wt.% of at least one monomer selected from the group consisting of vinyl aromatic compounds, vinyl aromatic compounds substituted on the ring and methacrylic acid (C₁-C₈)-alkyl esters and
A.1.2 from 1 to 50 wt.% of at least one monomer selected from the group consisting of vinyl cyanides, (meth)acrylic acid (C₁-C₈)-alkyl esters and derivatives of unsaturated carboxylic acids.

6. Use according to claim 5, wherein monomers A.1.1 are selected from at least one of the monomers styrene, α-methylstyrene and methyl methacrylate, and monomers A.1.2 are selected from at least one of the monomers acrylonitrile, maleic anhydride and methyl methacrylate.

7. Use according to claim 4, wherein the graft base A.2 is selected from diene rubber, EP(D)M rubber, acrylate, polyurethane, silicone, chloroprene and ethylene/vinyl acetate rubbers as well as composites of the mentioned rubbers.

8. Use according to any one of the preceding claims, wherein there is used as component B a cyclic lactone of formula (I)

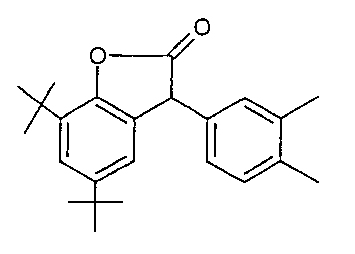

9. Use according to any one of the preceding claims, wherein there are used as component C.1 phosphorous acid esters of formula (II) in which R⁵ and R⁶ represent a benzyl, α-methylbenzyl, α,α-dimethylbenzyl, methyl, ethyl, isopropyl, tert.-butyl, tert.-amyl, isononyl, cyclopentyl or cyclohexyl radical and X represents

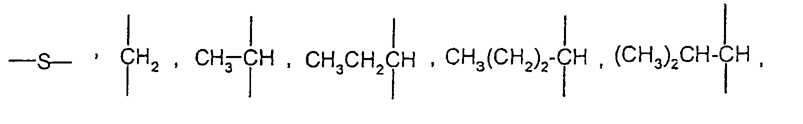

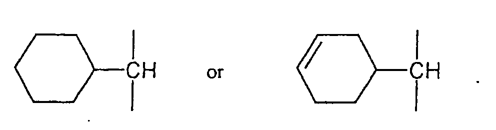

10. Use according to any one of the preceding claims, wherein there are used as component C.1 phosphorous acid esters of the formula

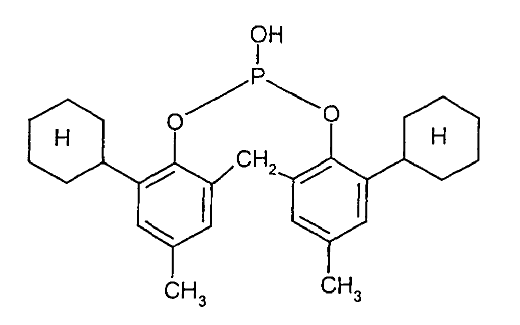

11. Use according to any one of the preceding claims, wherein there is used as component C at least one compound of the formula:

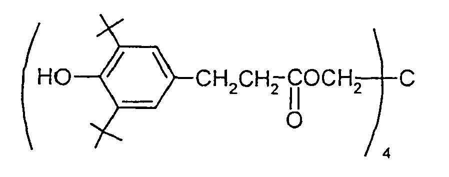

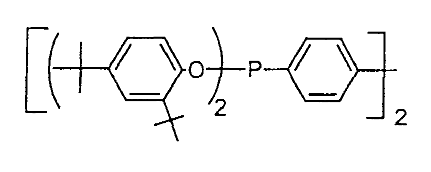

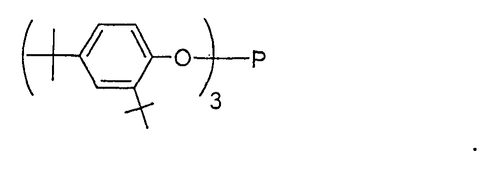

## Revendications

1. Utilisation d'une combinaison d'une ou plusieurs lactones correspondant au composant B avec au moins un composé correspondant au composant C afin de réduire les constituants monomères résiduels dans des compositions contenant
A) un polymère greffé constitué de
A.1 5 à 95% en poids d'au moins un monomère vinylique sur
A.2 95 à 5% en poids d'une ou plusieurs bases de greffage ayant des températures de transition vitreuse inférieures à 10°C ;
B) une lactone de formule (I)
| | | |
|---|---|---|
| | 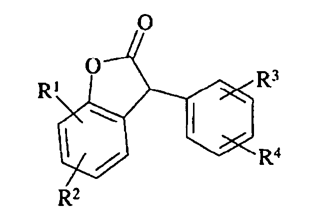 | (I) |
dans laquelle
R¹, R², R³ et R⁴ représentent indépendamment les uns des autres l'hydrogène, un alkyle en C₁ à C₆ ou un noyau cyclique de 5 ou 6 termes, et le cas échéant
C) au moins un composé choisi dans le groupe constitué par
C.1 des esters de l'acide phosphoreux de formule (II)
| | | |
|---|---|---|
| | 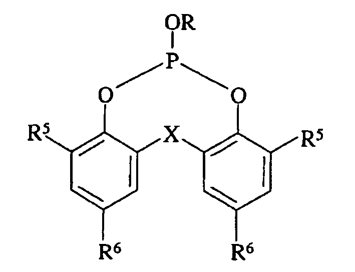 | (II) |
dans laquelle
R représente l'hydrogène ou un alkyle en C₁ à C₉, un cycloalkyle en C₅ à C₆, un aralkyle en C₇ à C₉ ou un aryle en C₆ à C₁₀,
R⁵ et R⁶ sont identiques ou différents et représentent un alkyle en C₁ à C₉, un cycloalkyle en C₅ à C₆, un aralkyle en C₇ à C₉ ou un aryle C₆ à C₁₀, et
X est -S- ou R⁷-CH, où R⁷ représente l'hydrogène, un alkyle en C₁ à C₆ ou un cycloalkyle en C₅ à C₆,
C.2 des phénols à empêchement stérique de formule (III)
| | | |
|---|---|---|
| | 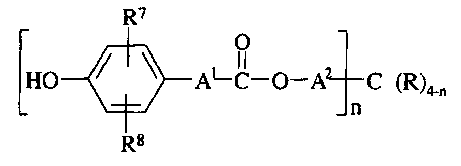 | (III) |
dans laquelle
R⁷ et R⁸ représentent indépendamment l'un de l'autre l'hydrogène, un alkyle en C₁ à C₆ ou un noyau cyclique de 5 ou 6 termes,
n est un nombre entier valant de 1 à 4,
A¹ et A² représentent indépendamment l'un de l'autre un alkylène en C₁ à C₆,
R représente indépendamment l'hydrogène, un alkyle en C₁ à C₆, un alcoxy en C₁ à C₆ ou un noyau cyclique de 5 ou 6 termes ;
C.3 des phosphites de formule (IV)
| | | |
|---|---|---|
| | 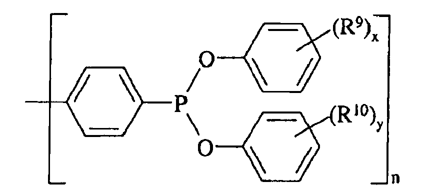 | (IV) |
dans laquelle
R⁹ et R¹⁰ représentent indépendamment l'un de l'autre l'hydrogène ou un alkyle en C₁ à C₆, le cas échéant un noyau cyclique de 5 ou 6 termes,
x et y valent indépendamment l'un de l'autre 0, 1, 2, 3, 4, 5, et
n vaut 1 ou 2,
et, le cas échéant, d'autres composants choisis dans l'un au moins des groupes suivants ;
D) un polycarbonate et/ou un polyester carbonate,
E) un (co)polymère vinylique,
F) des agents ignifugeants,
G) des additifs.

2. Utilisation selon la revendication 1 dans des compositions contenant de 0,01 à 2 parties en poids du composant B).

3. Utilisation selon la revendication 1 ou la revendication 2 dans des compositions contenant de 0,01 à 2 parties en poids du composant C).

4. Utilisation selon l'une des revendications précédentes dans des compositions contenant
A) de 2 à 50 parties en poids de polymère greffé du composant A)
B) de 0,01 à 1 partie en poids de lactone de formule (I)
C) de 0,01 à 2 parties en poids d'ester de l'acide phosphoreux de formule (II)
D) de 20 à 98 parties en poids de poly(ester)carbonate
E) de 0 à 40 parties en poids de (co)polymère vinylique
F) de 0 à 20 parties en poids d'agents ignifugeants
G) de 0 à 2 parties en poids d'agent anti-coulures.

5. Utilisation selon l'une des revendications précédentes dans des compositions contenant des polymères greffés qui peuvent être obtenus par polymérisation de
A.1.1 50 à 99% en poids d'au moins un monomère choisi dans le groupe constitué par des aromatiques vinyliques, des aromatiques vinyliques à noyau substitué et des méthacrylates d'alkyles en C₁ à C₈, et
A.1.2 1 à 50% en poids d'au moins un monomère choisi dans le groupe constitué par des cyanures de vinyle, des (méth)acrylates d'alkyles en C₁ à C₈ et des dérivés d'acides carboxyliques insaturés.

6. Utilisation selon la revendication 5, dans laquelle les monomères A.1.1 sont choisis parmi l'un au moins des monomères styrène, α-méthylstyrène et méthacrylate de méthyle, et les monomères A.1.2 sont choisis parmi l'un au moins des monomères acrylonitrile, anhydride maléique et méthacrylate de méthyle.

7. Utilisation selon la revendication 4, dans laquelle la base de greffage A.2 est choisie parmi le caoutchouc diène, le caoutchouc EP(D)M, les caoutchoucs acrylate, polyuréthane, silicone, chloroprène et éthylène/acétate de vinyle, ainsi que des composites des caoutchoucs précités.

8. Utilisation selon l'une des revendications précédentes, dans laquelle le composant B utilisé est une lactone cyclique de formule (I)
| | | |
|---|---|---|
| | 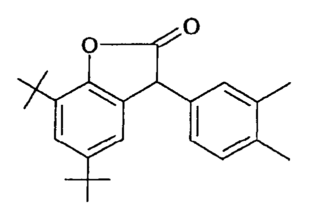 | |

9. Utilisation selon l'une des revendications précédentes, dans laquelle le composant C.1 utilisé est constitué par des esters de l'acide phosphoreux de formule (II), où R⁵ et R⁶ représentent un résidu benzyle, α-méthylbenzyle, α,α-diméthylbenzyle, méthyle, éthyle, isopropyle, *tert*.-butyle, *tert*.-amyle, isononyle, cyclopentyle ou cyclohexyle et X représente 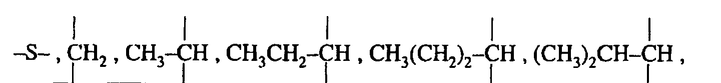
| | | | |
|---|---|---|---|
| 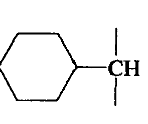 | ou | 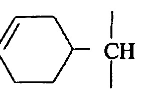 | . |

10. Utilisation selon l'une des revendications précédentes, dans laquelle le composant C.1 utilisé est constitué par des esters de l'acide phosphoreux.
| | | |
|---|---|---|
| | 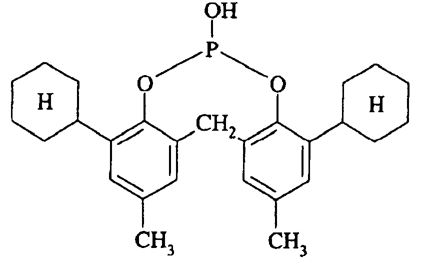 | |

11. Utilisation selon l'une des revendications précédentes, dans laquelle le composant C utilisé est au moins un composé de formule :
| | |
|---|---|
| 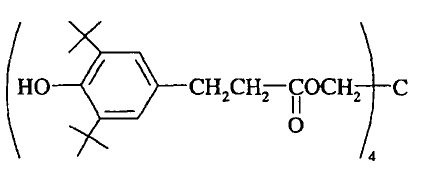 | |
| 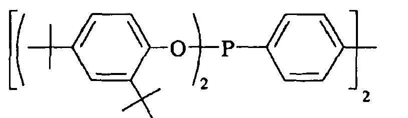 | |
| 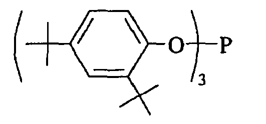 | |
